# EUROPÄISCHE PATENTSCHRIFT

(11) **EP 1 205 875 B1**
(45) Veröffentlichungstag und Bekanntmachung des Hinweises auf die Patenterteilung: **13.02.2008**
(21) Anmeldenummer: 01125097.4
(22) Anmeldetag: 23.10.2001
(51) Int. Cl.: G06K 13/08, G07C 5/08

(54) **Aufnahmevorrichtung für Datenkarten**
Chip card receiving device
Dispositif de réception de carte à puce

(30) Priorität: 02.11.2000 DE 20018694 U
(43) Veröffentlichungstag der Anmeldung: 15.05.2002
(73) Patentinhaber: Siemens VDO Automotive AG, 93055 Regensburg (DE)
(72) Erfinder: Burkart, Harald, 78054 Villingen-Schwenningen (DE)

(56) Entgegenhaltungen:
- EP-A- 0 696 008
- EP-A- 0 696 776
- DE-A- 19 857 226

## Beschreibung

Die Erfindung betrifft eine Aufnahmevorrichtung für Datenkarten mit einem die Datenkarten führenden Kartenhalter und mit dem Kartenhalter zugeordneten, beim Eingeben einer Datenkarte in die Aufnahmevorrichtung mittels der Datenkarte betätigbaren Verriegelungsmitteln sowie mit eine in der Lese-/Schreibposition befindliche Datenkarte in eine Entnahmeposition verbringbaren Auswurfmitteln.

Die Anwendung von Datenkarten zur Erfassung der persönlichen Arbeits-und Ruhezeiten der Fahrer von Nutzfahrzeugen erfordert wegen des dokumentarischen Wertes dieser Aufzeichnungen zuverlässige Sicherungen zur Vermeidung von in betrügerischer Absicht erfolgenden Störungen der Datenübertragung zwischen einem Datenerfassungsgerät und einer Datenkarte. Die räumlichen Möglichkeiten, insbesondere was die Bautiefe im haptischen Bereich der Fahrer anbelangt, sind jedoch im Nutzfahrzeug erheblich eingeschränkt, so dass ein größerer Transportweg gegebenenfalls auch eine Richtungsänderung während des Transports einer Datenkarte als Sicherheitsmaßnahme weder in einem eine entsprechende Aufnahmevorrichtung für Datenkarten beinhaltenden Fahrtschreiber noch in einer Ausführung als autonomes Datenkartenaggregat realisierbar sind. Erschwerend für die Entwicklung einer geeigneten Aufnahmevorrichtung für die Datenkarten kommt hinzu, dass das Einsatzmilieu erhebliche klimatische Schwankungen aufweist und durch temperatur- und feuchtigkeitsbedingte Materialveränderungen Funktionsstörungen auftreten können. Andererseits sind für eine Anwendung im Nutzfahrzeugen die Bedingungen der Großserienfertigung nämlich eine seriengerechte Montage von möglichst einfachen und mit vergleichsweise geringem Aufwand herstellbaren Bauteilen zu beachten.

Unter Einbeziehung der vorstehend genannten Serientauglichkeit ergibt sich somit die Aufgabe, eine Aufnahmevorrichtung für Datenkarten zu schaffen, welche für den Nutzfahrzeugeinsatz ausreichend robust ist und unter den am Einsatzort herrschenden Bedingungen eine verläßliche Funktion und Manipulationssicherheit bietet.

Die Lösung der gestellten Aufgabe ist dadurch gekennzeichnet, dass der Kartenhalter und ein auf diesem gelagerter Steuerschieber derart ausgebildet sind, dass der Steuerschieber entgegen der Wirkung einer Feder mittels einer eingebbaren Datenkarte relativ zum Kartenhalter verschiebbar ist, dass auf dem Kartenhalter eine dem Steuerschieber zugeordnete Rastklinke gefedert gelagert und derart ausgebildet ist, dass sie im Sinne einer Entriegelung des Steuerschiebers betätigbar ist, dass ein um eine quer zur Bewegungsrichtung der Datenkarten angeordnete Achse schwenkbares Schließelement vorgesehen ist, welches einerseits mit einer in dem Steuerschieber ausgebildeten Kulisse zusammenwirkt andererseits wenigstens einen in die Bewegungsebene der Datenkarten eingreifenden Riegel aufweist, dass dem Schließelement eine im Sinne des Verschließens des Kartenhalters wirkende Zuhaltefeder zugeordnet ist, dass das Schließelement beim Eingeben einer Datenkarte mittels der Datenkarte entgegen der Wirkung der Zuhaltefeder verschwenkbar ist und dass die Kulisse des Steuerschiebers derart ausgebildet ist, dass das Schließelement, wenn sich eine Datenkarte in dem Kartenhalter befindet, verriegelt ist.

Eine bevorzugte Ausführung der Erfindung sieht vor, dass der Kartenhalter als Stanz-Biege-Tell aus Blech hergestellt ist und dass der Kartenhalter

Aus DE 196 57 226 A1, gegen das die Ansprüche abgegrezt sind, ist eine Schließvorrichtung für ein Lese-/Schreibaggregat für Datenkarten bekannt. Das Lese-/Schreibaggregat umfasst eine mit einer Einstecköffnung für die Datenkarten versehene Frontwand und eine die Datenkarten in einer Lese-/Schreibposition halternde Kartenaufnahme. Au-βerdem weist die Schließvorrichtung ein Schließelement auf, das einen Zugang in das Lese-/Schreibaggregat verhindert, wenn dieses mit einer Datenkarte belegt ist.

Eine Datenkartenaufnahme mit einer Vorrichtung zu einem unzugänglichen Abdecken wenigstens eines einem Eingeben oder Entnehmen von Datenkarten zugeordneten Eingabeschlitzes und einem Gehäuse mit quaderförmigen Umrissen ist aus EP 0 696 776 A2 bekannt. Dabei ist eine durch Eingabe-/Entnahmesignale steuerbare Klappe vorgesehen, die in in parallelen Seitenwänden des Gehäuses ausgebildeten Kulissen ortsveränderlich geführt ist.

Weiterhin ist aus EP 0 696 008 A2 ein Kartenleser mit einem Gehäuse mit einem Einlass, durch den eine Karte eingeführt wird, und mit einem Verschlussmittel, das zu einem Öffnen und Schließen des Einlasses des Gehäuses geöffnet und geschlossen werden kann, bekannt. einteilig ausgebildet ist, wobei an einem flachen Bodenelement Leisten derart parallel angeformt sind, dass zwischen dem Bodenelement und den Leisten den Datenkarten entsprechende Führungsnute ausgebildet sind.

Das Schließelement ist bei der bevorzugten Ausführung in vorteilhafter Weise als eine im Kartenhalter zweiseitig gelagerte Brücke ausgebildet, auf welcher eine als Blattfeder ausgebildete Zuhaltefeder angeordnet ist.

Nach einer anderen Ausgestaltung der Erfindung ist an dem Schließelement, vorzugsweise an dem Riegel, eine zur Bewegungsebene der Datenkarten geneigte Fläche ausgebildet.

Nach einer anderen Ausgestaltung der Erfindung sind an dem Schließelement, vorzugsweise mit dem größtmöglichen Abstand voneinander, zwei Riegel angeformt.

Weitere zweckmäßige Ausgestaltungen der Erfindung beschreiben die vorstehend nicht zitierten Unteransprüche.

Der entscheidende Vorzug der gefundenen Lösung ist darin zu sehen, dass die Aufnahmevorrichtung aus einer sehr geringen Anzahl von auf einfache Weise zu montierenden, robust ausgebildeten Bauteilen besteht, wobei das bauliche Konzept vorsieht, dass zumindest der tragende Kartenhalter als Stanz-Biege-Teil aus Blech, beispielsweise aus einem korrosionsbeständigen Material hergestellt wird, was hohe Stückzahlen und zufriedenstellende Reproduzierbarkeit bei vergleichsweise niedrigen Herstellkosten ermöglicht. Außerdem bietet das bauliche Konzept auch bei Verwendung einfacher und damit preisgünstiger Schmiermittel weitgehende Wartungsfreiheit und Funktionssicherheit, und zwar auch unter den in einem Nutzfahrzeug herrschenden rauhen Betriebsbedingungen. Ferner läßt sich ein Minimum an Bauhöhe erzielen, wobei gegebenenfalls erforderliche Versteifungen mittels auf einfache Weise anbringbarer Sieken ausbildbar sind.

Da vorgesehen ist, die Datenkarten ausschließlich von Hand bis in die Lese-/Schreibposition in die Aufnahmevorrichtung einzugeben, besteht einerseits Unabhängigkeit von der Oberfläche und von Verbiegungen einer Datenkarte andererseits kann die Ausgabe der Datenkarten mit einer relativ großen Kraft erfolgen, wobei die sich auf der auszugebenden Datenkarte abstützende Zuhaltefeder eine Bremsfunktion ausübt. Erwähnenswert ist in diesem Zusammenhang auch, dass die Zuhaltefeder, wenn sich eine Datenkarte im Kartenhalter befindet, stärker gespannt ist und somit eine größere Schließkraft ausübt als wenn im Kartenhalter keine Datenkarte vorhanden ist. Das heißt, das Verschwenken des Schließelementes beim Einführen einer Datenkarte ist erleichtert. Vorteilhaft, weil mit einfachen Mitteln gelöst, ist ferner die Verriegelung der Aufnahmevorrichtung mittels der im Steuerschieber in geeigneter Weise ausgebildeten, das Schließelement führenden Kulisse. Im verriegelten Zustand des Schließelementes läßt sich eine in der Aufnahmevorrichtung befindliche Datenkarte nicht mehr verschieben, so dass Manipulationen durch Unterbrechen der Kontaktierung einer Datenkarte ausgeschlossen sind.

Die formstabile Ausbildung der Aufnahmevorrichtung bietet außerdem den Vorzug, dass bei einer unmittelbaren Zuordnung der Aufnahmevorrichtung zu einer Leiterplatte nicht nur temperatur- und feuchtigkeitsbedingte Verformungen der Leiterplatte wirkungslos bleiben, sondern auch infogle des für die Aufnahmevorrichtung gewählten Materials eine Abschirmwirkung gegeben ist. Ferner verbleibt bei der gefundenen Bauform an der der Aufnahmevorrichtung zugewandten Seite der Leiterplatte, an der sich auch der Kontaktsatz für die Kontaktierung der Datenkarten befindet, ein relativ großer Bestückungsfreiraum. Des weiteren bietet die vorgeschlagene Lösung die Voraussetzungen für eine auf einfachste Weise realisierbare Notentriegelung, wobei in einer frontseitigen Abdeckung der Aufnahmevorrichtung lediglich eine plombierte Öffnung vorzusehen ist, durch die die Rastklinke des Steuerschiebers mittels eines "Werkzeuges" betätigt werden kann.

Weitere Vorzüge der Erfindung gehen aus der folgenden Beschreibung des bevorzugten Ausführungsbeispiels hervor.

Von den das bevorzugte Ausführungsbeispiel betreffenden Zeichnungen zeigen:
- Figur 1: eine Frontansicht eines Fahrtschreibers, in welchem die erfindungsgemäße Aufnahmevorrichtung eingebaut ist,
- Figur 2: eine perspektivische Darstellung der Aufnahmevorrichtung,
- Figur 3: eine Seitenansicht der Aufnahmevorrichtung in Blickrichtung B in Figur 2, wobei ein mittlerer Bereich ausgespart und auf die Darstellung der Zugfedern der Übersichtlichkeit halber verzichtet ist,
- Figur 4: eine Teilschnittdarstellung von einer Frontblende, einer Leiterplatte und der Aufnahmevorrichtung in einer in dem Fahrtschreiber gemäß Fig. 1 vorgesehenen Zuordnung.
- Figur 5: eine perspektivische Darstellung der Rastklinke.

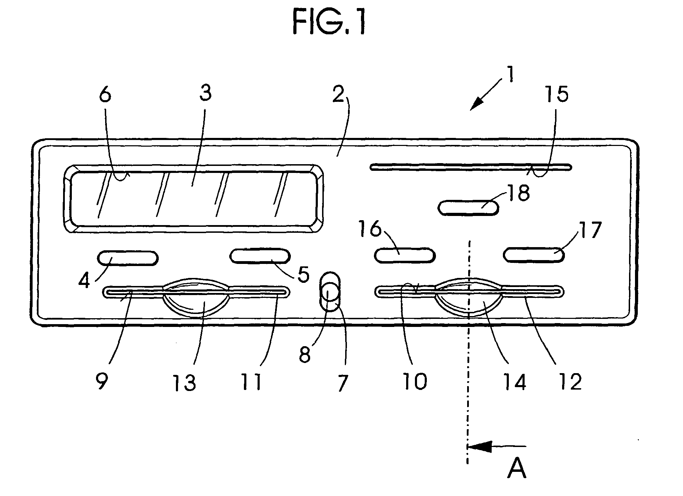

Der in Figur 1 dargestellte Fahrtschreiber 1 weist eine mit einem quaderförmigen Einbaugehäuse verbundene Frontblende 2 auf, in welcher ein Display 3 gehaltert ist sowie Tasten 4 und 5 angeordnet sind. Mit 6 ist ein dem Display 3 zugeordneter Fensterausschnitt bezeichnet; eine Abdeckung 7, welcher eine Plombe 8 zugeordnet ist, verschließt eine für Diagnose- und Parametrierzwecke vorgesehene Steckerfassung. Mit 9 und 10 sind Schlitze bezeichnet, die den Zugang zu den Aufnahmevorrichtungen ermöglichen, welche für die den Fahrern I und II zugeordneten persönlichen Datenkarten vorgesehen sind. Die Schlitze 9, 10 sind zum leichteren Einführen der Datenkarten mit trichterförmigen Senkungen 11 und 12 und mit zentral ausgeformten Fingermulden 13 und 14 versehen, derart, dass die Datenkarten bis in die jeweilige Lese-/Schreibposition einschiebbar sind. Ein mit 15 bezeichneter Schlitz ist für den Durchtritt des Druckträgers eines in dem Fahrtschreiber 1 angeordneten Belegdruckers vorgesehen. Weitere in der Frontblende 2 geführte beziehungsweise durch die Frontwand durchgreifende Tasten 16, 17 und 18 des Fahrtschreibers 1 dienen in Kombination mit den Tasten 4 und 5 dem Anwählen der wichtigsten Arbeitszeitdaten der Fahrer, dem Vorwärts- und Rückwärtsblättern in den Datensätzen einer angewählten Datenart, der Druckauslösung und dem Freigeben der Datenkarten.

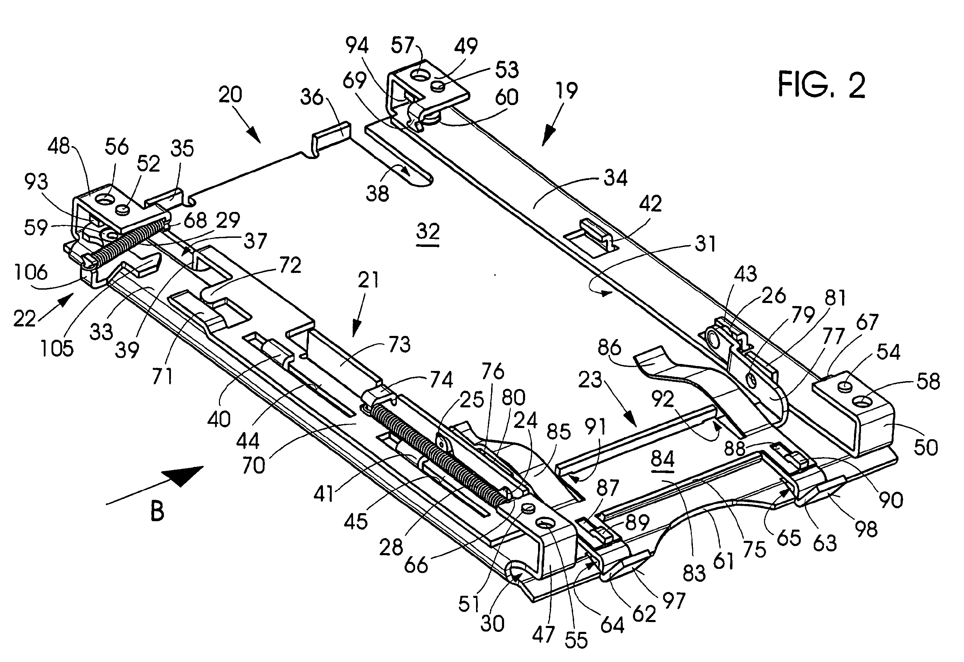

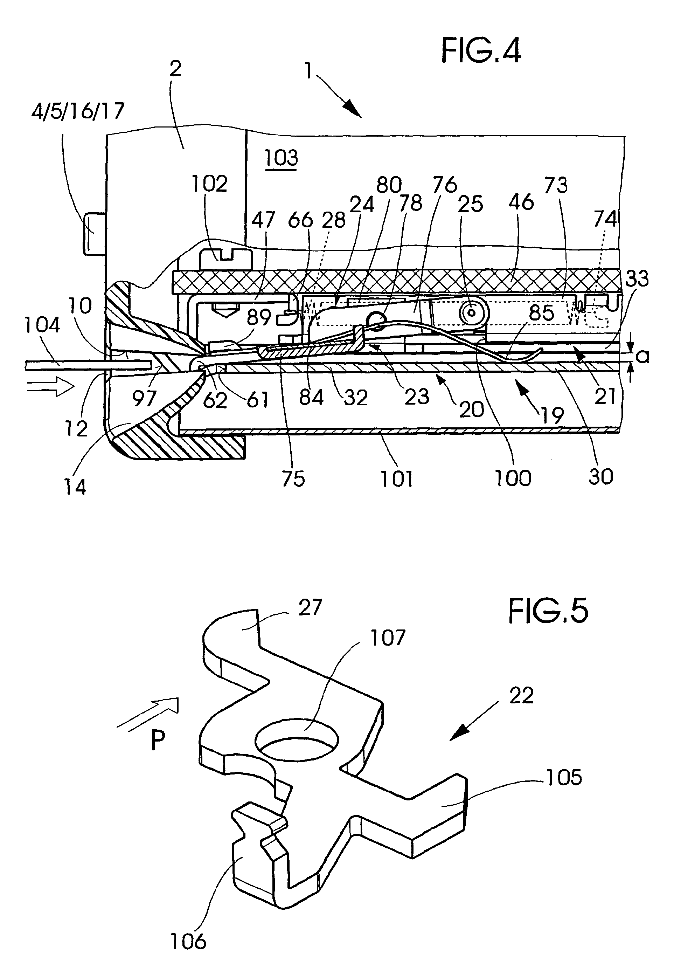

Die in Figur 2 dargestellte Aufnahmevorrichtung 19 besteht im wesentlichen aus einem eine Tasche für die Datenkarten bildenden Kartenhalter 20, einem auf dem Kartenhalter 20 verschiebbar gelagerten Steuerschieber 21, eine dem Steuerschieber 21 zugeordnete Rastklinke 22 sowie ein an dem Kartenhalter 20 drehbar gelagertes Schließelement 23, welches mit dem Steuerschieber 21 über eine in dem Steuerschieber 21 ausgebildete Kulisse 24 mittels Zapfen 25 oder 26 in Wirkverbindung steht. Die Aufnahmevorrichtung 19 ist im übrigen derart gestaltet, dass im Falle einer Anordnung von zwei Aufnahmevorrichtungen 19 nebeneinander, wie in der Figur 1 dargestellt, die Steuerschieber 21 und die Rastklinken 22 wechselseitig an den Aufnahmevorrichtungen 19 anbringbar sind, um ein beispielsweise motorisch betätigtes - da nicht erfindungswesentlich nicht dargestelltes - Auslöseorgan, welches im Falle des Freigebens einer Datenkarte die Rastklinke 22 verschwenkt indem es mit einem an der Rastklinke 22 ausgebildeten Finger 27 (Figuren 2 und 5) zusammenwirkt, zweckdienlich, das heißt, bei möglichst geringem Raumbedarf im Fahrtschreiber 1 anordnen zu können. An dieser Stelle sei außerdem darauf hingewiesen, dass das vorgesehene bauliche Konzept es auf einfache Weise ermöglicht, die Aufnahmevorrichtung 19 beidseitig mit Auswurfmitteln, nämlich mit zwei Steuerschiebern 21, diesen zugeordneten Zugfedern 28, zwei Rastklinken 22 und an diesen angreifenden Rückstellfedern 29 auszurüsten, wobei die Rastklinken 22 miteinander im Sinne einer gleichzeitigen Entriegelung der Steuerschieber 21 mechanisch gekoppelt sein müssen. Dadurch wird erreicht, dass auch verbogene oder gewölbte Datenkarten, die in den Führungsnuten 30 und 31 des Kartenhalters 20 erhöhte Reibung verursachen, kippfrei in die Entnahmeposition vorgeschoben werden können.

Im Einzelnen zeigt die Figur 2, dass der als Stanz-Biege-Teil einteilig ausgebildete Kartenhalter 20 ein versteifendes, gegebenenfalls mit Sieken versehenen Bodenelement 32 aufweist, an welchem parallel zueinander Leisten 33 und 34 angeformt sind derart, dass zwischen den Leisten 33, 34 und dem Bodenelement 32 die im wesentlichen der Dicke der Datenkarten entsprechenden Führungsnute 30, 31 gebildet sind, die gleichzeitig auch, und zwar mit geringem Spiel der Seitenführung der Datenkarten dienen. Als Endanschlag für die bei der vorgeschlagenen Aufnahmevorrichtung 19 von Hand in die Schreib-/Leseposition vorzusteckenden Datenkarten sind am Bodenelement 32 Lappen 35 und 36 angebogen. Im Bodenelement 32 angebrachte Schlitze 37 und 38 dienen dem Durchgreifen von an den Steuerschiebern 21 angeformten Mitnehmern 39. Mit 40 und 41 sowie mit 42 und 43 sind aus den Leisten 33, 34 herausgeformte Zungen bezeichnet, welche für die Führung und Halterung der Steuerschieber 21 auf dem Kartenhalter 20 vorgesehen sind. Diesbezüglich sind in einem Steuerschieber 21 schlüssellochähnliche Führungsschlitze 44 und 45 ausgebildet. Der Befestigung des Kartenhalters 20 an einer Leiterplatte 46 (Figur 4) des Fahrtschreibers 1 dienen an den Leisten 33, 34 und somit am Kartenhalter 20 angeformte Podeste 47, 48, 49 und 50, an denen jeweils Zentrierzapfen 51, 52, 53 und 54 und Gewindebohrungen 55, 56, 57 und 58 ausgebildet sind. In diesem Zusammenhang sei erwähnt, dass zur Fertigungsvereinfachung an Stelle der Podeste 47, 48, 49, 50 an den Leisten 33, 34 lediglich Stützschenkel mit daran ausgebildeten Fahnen zur bildung von Schränkverbindungen mit der Leiterplatte 46 rechtwinklig angeformt sein können. Zwei aus den Leisten 33, 34 herausgezogene Düsen 59 und 60 dienen den Rastklinken 22 als Lagerachsen. Wie aus der Figur 2 außerdem ersichtlich ist, weist das frontseitig angewinkelt ausgebildete Bodenelement 32 eine mittig angebrachte Aussparung 61 sowie den an dem Schließelement 23 ausgebildeten Riegeln 62 und 63 zugeordnete Freischnitte 64 und 65 auf. Ferner sei noch darauf hingewiesen, dass an dem vorzugsweise mittels eines Folgeverbundwerkzeuges hergestellten Kartenhalter 20 auch Haken 66, 67, 68 und 69 einerseits zum Einhängen der Zugfedern 28 andererseits zum Einhängen der Rückstellfedern 29 unmittelbar angeformt sind. An dem einen Schenkel 70 des wenigstens teilweise ein Winkelprofil aufweisenden Steuerschiebers 21, der ebenfalls als Stanz-Biege-Teil aus Blech hergestellt und, wie bereits erwähnt, auf dem Kartenhalter 20 verschiebbar geführt ist, sind außer dem Mitnehmer 39 ein mit der Rastklinke 22 zusammenwirkender Niederhalter 71 sowie ein Rastzahn 72 ausgebildet. An dem anderen Schenkel 73 ist ein der Zugfeder 28 zugeordneter Haken 74 angeformt sowie die das Schließelement 23 steuernde Kulisse 24 ausgeschnitten.

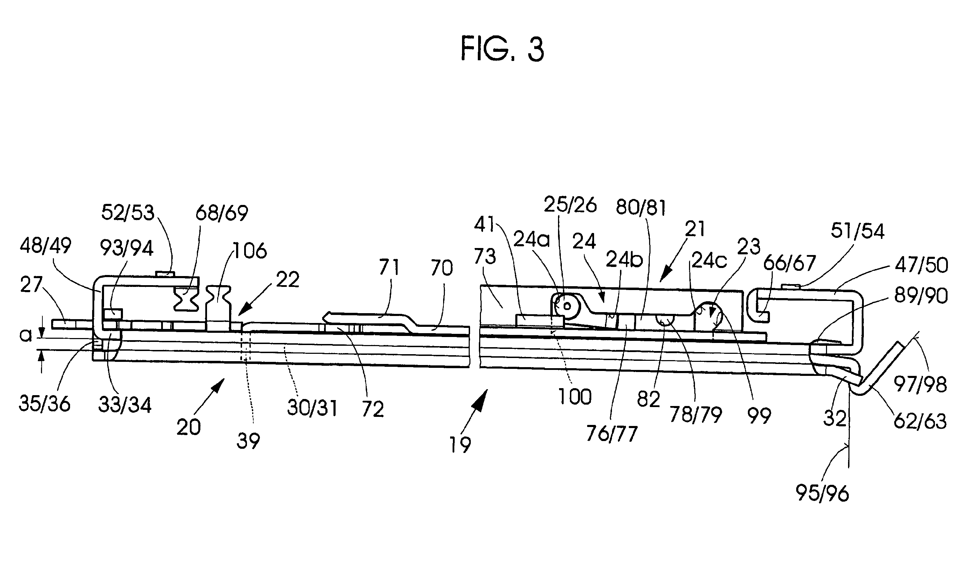

Das Schließelement 23 ist ebenfalls stanzbiegetechnisch hergestellt. Die bereits erwähnten Riegel 62, 63 sind an einer Brücke 75 angeformt, die als u-Profil ausgebildet und mit Lagerarmen 76 und 77 versehen ist. An letzteren sind einerseits die in die Kulissen 24 der Steuerschieber 21 eingreifenden Zapfen 25, 26 andererseits die Lagerzapfen 78 (Figur 3) und 79 des Schließelementes 23 herausgedrückt. Mit 80 und 81 sind an den Leisten 33, 34 angeformte und mit den Lagerzapfen 78, 79 des Schließelementes 23 zugeordneten Lagerbohrungen versehene Pfeiler bezeichnet. Eine der Lagerbohrungen ist in Figur 3 mit 82 bezeichnet. Damit das Schließelement 23 seine Funktion ausüben kann, ist eine unmittelbar mit dem Schließelement 23 verbundene, als Blattfeder ausgebildete Zuhaltefeder 83 vorgesehen. Diese wird im wesentlichen von einem in das u-Profil der Brücke 75 des Schließelementes 23 passenden Stützelement 84 und an diesem angeformten Andruckschenkeln 85 und 86 gebildet. Die Befestigung der Zuhaltefeder 83 auf dem Schließelement 23 ist formschlüssig derart realisiert, dass einerseits in der Zuhaltefeder 83 Ösen 87 und 88 ausgeformt und diesen aus dem Schließelement 23 herausgebogene Haken 89 und 90 zugeordnet sind andererseits in dem einen nicht näher bezeichneten Schenkel der Brücke 75 Schlitze und an den Stützelement 84 der Zuhaltefeder 83 den Schlitzen zugeordnete Zungen ausgebildet sind. Die Zungen-Schlitz-Verbindungen sind in Figur 2 mit 91 und 92 bezeichnet.

Wie zusätzlich der Figur 2, insbesondere aber der Figur 3 entnommen werden kann, ist der Rastklinke 22 ein in axialer Richtung wirksamer, stanzbiegetechnisch ausgebildeter Anschlag 93 oder 94 zugeordnet, der, wenn die Rastklinke 22 mittels des am Steuerschieber 21 ausgebildeten Rastzahnes 72 verschwenkt wird, durch den in diesem Funktionszustand über der Rastklinke 22 liegenden Niederhalter 71 in seiner Wirkung ergänzt wird. Mit 95 und 96 sind rückseitig an den Riegeln 62, 63 ausgebildete Flächen bezeichnet, die im montierten Zustand des Schließelementes 23 im wesentlichen rechtwinklig zur Bewegungsebene der Datenkarten stehen, das heißt, unter der Wirkung der Zuhaltefeder 83 in die Bewegungsebene der Datenkarten eingetaucht sind und eine Verriegelungsebene bilden. Demgegenüber bilden frontseitige Flächen 97 und 98 der Riegel 62, 63, die zur Bewegungsebene der Datenkarten geneigt ausgebildet sind, eine schiefe Ebene, die das Verschwenken des Schließelementes 23 beim Eingeben der Datenkarten erleichtert.

Das in Figur 3 angegebene Maß "a" dient der Kennzeichnung der Höhe der zwischen dem Bodenelement 32 und den Leisten 33, 34 vorgesehenen Führungsnute 30, 31. Mit 24a ist in Figur 3 der Abschnitt der Kulisse 24 bezeichnet, der ein Verschwenken des Schließelementes 23 aus der dargestellten Schließstellung gestattet. 24b bezeichnet den Abschnitt der Kulisse 24, der bewirkt, dass die Riegel 62, 63 während der Ein- oder Ausgabe einer Datenkarte im Sinne einer Entriegelung des Kartenhalters 20 angehoben sind. Der Abschnitt 24c verhindert, wenn der Steuerschieber 21 mittels der Rastklinke 22 arretiert ist, infolge der schräg zur Bewegungsrichtung des Steuerschiebers 21 verlaufenden Kulissenbegrenzung 99 eine Drehbewegung des Schließelementes 23 aus der Schließstellung. Mit anderen Worten, ein Anheben der Riegel 62, 63 von außen ist ausgeschlossen.

Der Vollständigkeit halber sei noch erwähnt, dass der Schenkel 70 des Steuerschiebers 21 zur Freistellung der Kulisse 24 und zur Bildung der Kulisse 24 mit niedrigster Bauhöhe in geeigneter Weise freigeschnitten ist. Der in Figur 3 gestrichelt dargestellte Freischnitt ist mit 100 bezeichnet.

Die Figur 4, die die Zuordnung der erfindungsgemäßen Aufnahmevorrichtung 19 zu der Frontblende 2 und der Leiterplatte 46 des Fahrtschreibers 1 zeigt, verdeutlicht den für die Aufnahmevorrichtung 19 erforderlichen relativ geringen Bedarf an Bauhöhe. Das heißt, in dem konkreten Fall des Fahrtschreibers 1 steht zwischen der Leiterplatte 46 und einem Bodenteil 101 eine Bauhöhe von maximal 10 mm zur Verfügung. Die an der Leiterplatte 46 mittels Schrauben, von denen eine mit 102 bezeichnet ist, befestigte Aufnahmevorrichtung 19 ermöglicht bei einer Bauhöhe von ca. 7,5 mm ein Nachgeben des relativ dünnen und großflächigen Bodenteils 101 beim Handhaben des Fahrtschreibers 1, beispielsweise bei dessen Einbau in ein Fahrzeug, ohne dass Rückwirkungen auf die Aufnahmevorrichtung 19 und über diese auf die biegeempfindliche Leiterplatte 46 erfolgen. Mit 103 ist eine Seitenwand des Fahrtschreibers 1 bezeichnet, 104 soll eine einzugebende Datenkarte darstellen.

Mit der Figur 5 sei die in den bereits beschriebenen Figuren nur zum Teil erkennbare, mit dem Steuerschieber 21 zusammenwirkende Rastklinke 22 verdeutlicht. Die Rastklinke 22 stellt im wesentlichen einen zweiarmigen Hebel dar, dessen einer Arm von dem Finger 27 gebildet wird, welcher zum Freigeben bzw. zum Auswerfen einer Datenkarte in Pfeilrichtung P betätigt wird. Der andere Arm ist mit einer Klinkenspitze 105 versehen, die mit dem am Steuerschieber 21 ausgebildeten Rastzahn 72 zusammenwirkt. Ein angebogener Haken 106 dient dem Einhängen des einen Endes der Rückstellfeder 29; mit 107 ist eine den Düsen 59, 60 entsprechende Lagerbohrung der Rastklinke 22 bezeichnet.

Im folgenden sei der Ablauf beim Eingeben und Ausgeben einer Datenkarte 104 nochmals zusammengefasst. Beim Eingeben einer Datenkarte 104 wird diese zunächst in einem der in der Frontblende 2 befindlichen Schlitze 9 oder 10 vororientiert, trifft auf die an den Riegeln 62, 63 ausgebildeten Flächen 97, 98 und verschwenkt aufgrund der gegebenen keilgetrieblichen Anordnung das Schließelement 23, wobei die Andruckschenkel 85, 86 der Zuhaltefeder 83 eine zusätzliche Vorspannung erfahren. Nachfolgend erfolgt eine Ausrichtung und ein Niederhalten der Datenkarte 104 durch die Führungsnute 30, 31 und die Andruckschenkel 85, 86 der Zuhaltefeder 83. Beim weiteren Einschieben der Datenkarte 104 trifft diese auf den am Steuerschieber 21 ausgebildeten und in die Führungsnut 30 eingreifenden Mitnehmer 39 wodurch der Steuerschieber 21 entgegen der Kraft der Zugfeder 28 verschoben wird, und zwar bis zum Anschlagen der Datenkarte 104 an den Lappen 35, 36 beziehungsweise bis zum Einfallen der Klinkenspitze 105 der Rastklinke 22 vor dem am Steuerschieber 21 ausgebildeten Rastzahn 72. Unmittelbar bevor die Datenkarte 104, durch das Wirksamwerden der Rastklinke 22 die Lese-/Schreibposition erreicht hat, sind das Schließelement 23 über die Kulisse 24 verschwenkt und die Riegel 62, 63 hinter der eingeschobenen Datenkarte 104 abgesenkt worden. Das Erreichen der Lese-/Schreibposition, mit anderen Worten die ordnungsgemäße Funktionslage der Datenkarte 104, kann beispielsweise mittels einer der Rastklinke 22 zugeordneten Lichtschranke überwacht werden. Das Ausgeben der Datenkarte 104 wird durch eine Tastenbetätigung ausgelöst und erfolgt durch Verschwenken der Rastklinke 22 indem an dem Finger 27 ein vorzugsweise motorisch betätigtes Auslöseorgan angreift. Nach der Freigabe des Steuerschiebers 21 durch die Rastklinke 22 führt die Zugfeder 28 den Steuerschieber 21 in die durch die Kulisse 24 vorgegebene Ausgangslage zurück. Dabei erfolgt unmittelbar nach der Freigabe, gesteuert durch die Kulisse 24 ein Anheben der Riegel 62, 63. Gleichzeitig mit dem Rückführen des Steuerschiebers 21 wird die Datenkarte 104 in die Entnahmeposition verschoben, wobei die Andruckschenkel 85, 86 der Zuhaltefeder 83 eine Bremsfunktion ausüben. Wird die Datenkarte 104 entnommen, schwenkt auch das Schließelement 23 unter der Wirkung der Zuhaltefeder 83 in die ebenfalls durch die Kulisse 24 bestimmte Ausgangsstellung zurück, in der die Riegel 62, 63, wie die Figur 4 zeigt, in die Bewegungsebene der Datenkarten 104 eingreifen.

## Patentansprüche

1. Aufnahmevorrichtung für Datenkarten mit einem die Datenkarten führenden Kartenhalter und mit dem Kartenhalter zugeordneten, beim Eingeben einer Datenkarte in die Aufnahmevorrichtung mittels der Datenkarte betätigbaren Verriegelungsmitteln sowie mit eine in der Lese /Schreibposition befindliche Datenkarte in eine Entnahmeposition verbringbaren Auswurfmitteln,
**dadurch gekennzeichnet,**
**dass** der Kartenhalter (20) und ein auf diesem gelagerter Steuerschieber (21) derart ausgebildet sind, dass der Steuerschieber (21) entgegen der Wirkung einer Zugfeder (28) mittels einer eingebbaren Datenkarte (104) relativ zum Kartenhalter (20) verschiebbar ist,
**dass** auf dem Kartenhalter (20) eine dem Steuerschieber (21) zugeordnete Rastklinke (22) gefedert gelagert und derart ausgebildet ist, dass sie im Sinne einer Entriegelung des Steuerschiebers (21) betätigbar ist,
**dass** ein um eine quer zur Bewegungsrichtung der Datenkarten (104) angeordnete Achse schwenkbares Schließelement (23) vorgesehen ist, welches einerseits mit einer in dem Steuerschieber (21) ausgebildeten Kulisse (24) zusammenwirkt andererseits wenigstens einen in die Bewegungsebene der Datenkarten (104) eingreifenden Riegel (62 oder 63) aufweist,
**dass** dem Schließelement (23) eine im Sinne des Verschließens des Kartenhalters (20) wirkende Zuhaltefeder (83) zugeordnet ist,
**dass** das Schließelement (23) beim Eingeben einer Datenkarte (104) mittels der Datenkarte (104) entgegen der Wirkung der Zuhaltefeder (83) verschwenkbar ist und
**dass** die Kulisse (24) des Steuerschiebers (21) derart ausgebildet ist, dass das
Schließelement (23), wenn sich eine Datenkarte (104) in dem Kartenhalter (20) befindet, verriegelt ist.

2. Aufnahmevorrichtung nach Anspruch 1,
**dadurch gekennzeichnet,**
**dass** der Kartenhalter (20) einteilig ausgebildet ist, wobei an einem flachen Bodenelement (32) Leisten (33, 34) derart parallel angeformt sind, dass zwischen dem Bodenelement (32) und den Leisten (33, 34) den Datenkarten (104) entsprechende Führungsnute (30, 31) ausgebildet sind.

3. Aufnahmevorrichtung nach Anspruch 1,
**dadurch gekennzeichnet,**
**dass** der Kartenhalter (20) als Stanz-Biege-Teil aus Blech hergestellt ist.

4. Aufnahmevorrichtung nach Anspruch 2,
**dadurch gekennzeichnet,**
**dass** Mittel zur Lagerung des Steuerschiebers (21), der Rastklinke (22) und des Schließelementes (23) sowie Mittel zur Befestigung des Kartenhalters (20) am Einbauort unmittelbar an dem Kartenhalter (20) angeformt sind.

5. Aufnahmevorrichtung nach Anspruch 1,
**dadurch gekennzeichnet,**
**dass** das Schließelement (23) als eine im Kartenhalter (20) zweiseitig gelagerte Brücke (75) ausgebildet ist.

6. Aufnahmevorrichtung nach Anspruch 5,
**dadurch gekennzeichnet,**
**dass** die Zuhaltefeder (83) als Blattfeder ausgebildet ist,
**dass** die Zuhaltefeder (83) auf dem Schließelement (23) befestigt ist und
**dass** wenigstens ein die Federfunktion ausübender Andruckschenkel (85, 86) der Zuhaltefeder (83) derart ausgebildet ist, dass, wenn das Schließelement (23) im Kartenhalter (20) montiert ist, der Andruckschenkel (85, 86) federnd in Wirkverbindung mit dem Bodenelement (32) des Kartenhalters (20) oder einer eingegebenen Datenkarte (104) steht.

7. Aufnahmevorrichtung nach Anspruch 1,
**dadurch gekennzeichnet,**
**dass** an dem Schließelement (23) eine zur Bewegungsebene der Datenkarten (104) geneigte Fläche (97 oder 98) ausgebildet ist.

8. Aufnahmevorrichtung nach Anspruch 5,
**dadurch gekennzeichnet,**
**dass** an dem Schließelement (23) zwei Riegel (62, 63) angeformt sind.

9. Aufnahmevorrichtung nach Anspruch 8,
**dadurch gekennzeichnet,**
**dass** die Riegel (62, 63) und das Bodenelement (32) des Kartenhalters (20) derart einander zugeordnet sind, dass für ein Eintauchen der Riegel (62, 63) in die Bewegungsebene der Datenkarten (104) in dem Bodenelement (32) Freischnitte (64, 65) ausgebildet sind und
**dass** das Bodenelement (32) ferner mit einer Aussparung (61) versehen ist, welche in Bewegungsrichtung einer einzugebenden Datenkarte (104) hinter die Verrieglungsebene der Riegel (62, 63) in das Bodenelement (32) eingreift.

10. Aufnahmevorrichtung nach Anspruch 2,
**dadurch gekennzeichnet,**
**dass** die Führungsnute (30, 31) in Bewegungsrichtung der Datenkarten (104) stirnseitig aufgeweitet sind.

11. Aufnahmevorrichtung nach Anspruch 1,
**dadurch gekennzeichnet,**
**dass** zwischen dem Steuerschieber (21) und dem Kartenhalter (20) Zungen-Schlitz-Verbindungen vorgesehen sind, wobei die an den Leisten (33, 34) angeformten Zungen (40, 41, 42, 43) abgewinkelt und die den Zungen (40, 41, 42, 43) zugeordneten, in dem Steuerschieber (21) vorgesehenen Führungsschlitze (44, 45) schlüssellochartig ausgebildet sind.

12. Aufnahmevorrichtung nach Anspruch 4,
**dadurch gekennzeichnet,**
**dass** als Mittel zur Befestigung des Kartenhalters (20) am Einbauort an den Leisten (33, 34) Podeste (47, 48, 49, 50) angeformt sind, an welchen wenigstens zwei Zentrierzapfen (51, 52, 53, 54) sowie Gewindebohrungen (55, 56, 57, 58) ausgebildet sind.

13. Aufnahmevorrichtung nach Anspruch 4,
**dadurch gekennzeichnet,**
**dass** eine der Rastklinke (22) zugeordnete Lagerachse (59, 60), unmittelbar an dem Kartenhalter (20) angeformt ist und
**dass** für die axiale Sicherung der Rastklinke (22) ein am Steuerschieber (21) fingerförmig ausgebildeter Niederhalter (71) vorgesehen ist.

14. Aufnahmevorrichtung nach Anspruch 1,
**dadurch gekennzeichnet,**
**dass** die in dem Steuerschieber (21) vorgesehene Kulisse (24) derart ausgebildet ist, dass mit dem Eingeben einer Datenkarte (104) in den Kartenhalter (20) das Schließelement (23) aus der Schließstellung verschwenkt und die Führungsebene des Kartenhalters (20) freigegeben wird, beim weiteren Verschieben des Steuerschiebers (21) mittels der Datenkarte (104) das Schließelement (23) in der verschwenkten Lage gehalten wird und in der Endstellung der Datenkarte (104) das Schließelement (23) selbsttätig in die Schließstellung zurückgeführt wird und dabei gegen Verschwenken verriegelt ist.

15. Aufnahmevorrichtung nach Anspruch 6,
**dadurch gekennzeichnet,**
**dass** die Zuhaltefeder (83) mit dem Schließelement (23) formschlüssig unter Verwendung von Haken/Ösen - sowie Stütz- und Steckverbindungsmitteln (89, 90 / 87, 88 und 91, 92) verbunden ist.

## Claims

1. Receptacle for data cards having a cardholder in which the data cards are guided, and having locking means which are assigned to the cardholder and which can be actuated by means of a data card when the data card is inserted into the receptacle, and having ejection means which can move a data card located in the read-write position into a removal position, **characterized in that** the cardholder (20) and a control slide (21) mounted thereon are embodied in such a way that the control slide (21) can be displaced relative to the cardholder (20), counter to the effect of a tension spring (28) by means of an insertable data card (104), **in that** a locking latch (22) which is assigned to the control slide (21) is mounted in a sprung fashion on the cardholder (20) and embodied in such a way that it can be activated with the effect of unlocking the control slide (21), **in that** a closing element (23) which can be pivoted about an axis arranged transversely with respect to the direction of movement of the data cards (104) is provided, which closing element (23), on the one hand, interacts with a connecting part (24) which is formed in the control slide (21) and, on the other hand, has at least one bolt (62 or 63) which engages in the plane of movement of the data cards (104), **in that** a retaining spring (83) which acts with the effect of closing the cardholder (20) is assigned to the closing element (23), **in that**, when a data card (104) is inserted, the closing element (23) can be pivoted counter to the effect of the retaining spring (83) by means of the data card (104), and **in that** the connecting part (24) of the control slide (21) is embodied in such a way that the closing element (23) is locked if there is a data card (104) in the cardholder (20).

2. Receptacle according to Claim 1, **characterized in that** the cardholder (20) is constructed in one piece, ridges (33, 34) being formed on a flat base element (32) in parallel in such a way that guide grooves (30, 31) corresponding to the data cards (104) are formed between the base element (32) and the ridges (33, 34).

3. Receptacle according to Claim 1, **characterized in that** the cardholder (20) is manufactured from sheet metal as a punched and bent part.

4. Receptacle according to Claim 2, **characterized in that** means for supporting the control slide (21), the locking latch (22) and the closing element (23) as well as means for attaching the cardholder (20) at the installation location are formed directly onto the cardholder (20).

5. Receptacle according to Claim 1, **characterized in that** the closing element (23) is embodied as a bridge (75) which is mounted on two sides in the cardholder (20).

6. Receptacle according to Claim 5, **characterized in that** the retaining spring (83) is embodied as a leaf spring, **in that** the retaining spring (83) is attached to the closing element (23), and **in that** at least one pressing-on limb (85, 86), performing the spring function, of the retaining spring (83) is embodied in such a way that, when the closing element (23) is mounted in the cardholder (20), the pressing-on limb (85, 86) has a sprung operative connection to the base element (32) of the cardholder (20) or of an inserted data card (104).

7. Receptacle according to Claim 1, **characterized in that** a surface (97 or 98) which is inclined with respect to the plane of movement of the data cards (104) is formed on the closing element (23).

8. Receptacle according to Claim 5, **characterized in that** two bolts (62, 63) are formed on the closing element (23).

9. Receptacle according to Claim 8, **characterized in that** the bolts (62, 63) and the base element (32) of the cardholder (20) are assigned to one another in such a way that free punches (64, 65) are formed in the base element (32) for the bolts (62, 63) to dip into the plane of movement of the data cards (104), and **in that** the base element (32) is also provided with a recess (61) which engages in the base element (32) behind the locking plane of the bolts (62, 63), in the direction of movement of a data card (104) to be inserted.

10. Receptacle according to Claim 2, **characterized in that** the guide grooves (30, 31) are widened at the end in the direction of movement of the data cards (104).

11. Receptacle according to Claim 1, **characterized in that** tongue-slot connections are provided between the control slide (21) and the cardholder (20), the tongues (40, 41, 42, 43) which are formed on the ridges (33, 34) being bent and the guide slots (44, 45) which are assigned to the tongues (40, 41, 42, 43) and are provided in the control slide (21) being embodied in the manner of key holes.

12. Receptacle according to Claim 4, **characterized in that** platforms (47, 48, 49, 50) are formed, as means for attaching the cardholder (20), at the installation location on the ridges (33, 34) and at least two centering pins (51, 52, 53, 54) and threaded holes (55, 56, 57, 58) are formed on said platforms (47, 48, 49, 50).

13. Receptacle according to Claim 4, **characterized in that** a bearing axle (59, 60) assigned to the locking latch (22) is formed directly on the cardholder (20), and **in that** a retaining element (71) which is embodied in the form of a finger on the control slide (21) is provided for axially securing the locking latch (22).

14. Receptacle according to Claim 1, **characterized in that** the connecting part (24) which is provided in the control slide (21) is embodied in such a way that when a data card (104) is inserted into the cardholder (20) the locking element (23) pivots out of the closed position and the guide plane of the cardholder (20) is cleared, and as the control slide (21) is displaced further by means of the data card (104), the closing element (23) is held in the pivoted position, and in the end position of the data card (104) the closing element (23) is automatically moved back into the closed position and in doing so locked against pivoting.

15. Receptacle according to Claim 6, **characterized in that** the retaining spring (83) is connected in a positively locking fashion to the closing element (23) using hooks/eyelets as well as supporting and plug-in connecting means (89, 90/87, 88 and 91, 92).

## Revendications

1. Système de réception pour cartes à puce comportant un support de cartes, qui guide les cartes à puce, et des moyens de verrouillage, affectés au support de cartes et actionnés au moyen de la carte à puce lorsque la carte à puce est introduite dans le système de réception, ainsi que des moyens d'éjection pouvant amener dans une position de retrait une carte à puce qui se trouve dans une position de lecture et écriture,
**caractérisé par le fait**
**que** le support de cartes (20) et un tiroir de commande (21) monté sur celui-ci sont conçus de telle manière que le tirait- de commande (21.) peut se déplacer par rapport au support de cartes (20), à l'encontre de l'action d'un ressort de traction (28), au moyen d'une carte à puce (104) introduite,
**qu'**un cliquet d'arrêt (22) correspondant au tiroir de commande (21) est monté d'une façon élastique sur le support de cartes (20) et est configure de manière telle qu'il peut être actionné dans le sens d'un déverrouillage du tiroir de commande (21),
**qu'**il est prévu un élément de verrouillage (23) pivotant autour d'un axe placé perpendiculairement à la direction de déplacement des cartes à puce (104), où ledit élément de verrouillage, d'une part, concoure avec une coulisse (24) ménagée dans le tiroir de commande (21), d'autre part, comporte au moins un verrou (62 ou 63) intervenant dans le plan de déplacement des cartes à puce (104),
**qu'**un ressort (83) de maintien en position fermée, agissant dans le sens du verrouillage du support de cartes (20), est affecte à l'organe de verrouillage (23),
**qu'**on peut, lors de l'introduction d'une carte à puce (104), faire pivoter l'organe de verrouillage (23) au moyen de la carte à puce (104) en s'opposant à l'action du ressort (83) de maintien en position fermée et
**que** la coulisse (24) du tiroir de commande (21) est configurée de manière telle que l'organe de verrouillage (23) est verrouillé lorsqu'une carte à puce (104) se trouve dans le support de carte (20).

2. Système de réception selon la revendication 1,
**caractérisé par le fait**
**que** le support de carte (20) est conçu en une seule et unique pièce, des barrettes (33, 34) étant placées en parallèle sur un élément de base (32) plat de manière telle que des rainures de guidage (30, 31) correspondant aux cartes à puce (104) sont ménagées entre l'élément de base (32) et les barrettes (33, 34).

3. Système de réception selon la revendication 1,
**caractérisé par le fait**
**que** le support de carte (20) est fabriqué en tôle sous forme de pièce estampée et pliée.

4. Système de réception selon la revendication 2,
**caractérisé par le fait**
**que** des moyens destinés à la suspension du tiroir de commande (21), du cliquet d'arrêt (22) et de l'organe de verrouillage (23), ainsi que des moyens destinés à la fixation du support de cartes (20) au lieu de montage sont formés directement sur le support de cartes (20).

5. Système de réception selon la revendication 1,
**caractérisé par le fait**
**que** l'organe de verrouillage (23) est conçu comme portique (75) suspendu des deux côtés dans le support de cartes (20).

6. Système de réception selon la revendication 5,
**caractérisé par le fait**
**que** le ressort (83) de maintien en position fermée est conçu sous forme de ressort à lame,
**que** le ressort (83) de maintien en position fermée est fixé à l'organe de verrouillage (23) et
**que** au moins l'un des bras de pression (85, 86) du ressort (83) de maintien en position fermée exerçant la fonction de ressort est conçu de manière telle que, lorsque l'organe de verrouillage (23) est monté dans le support de cartes (20), le bras de pression (85, 86) concoure d'une façon élastique avec l'élément de base (32) du support de cartes (20) ou avec une carte à puce (104) qui a été insérée.

7. Système de réception selon la revendication 1,
**caractérisé par le fait**
**qu'**une surface (97 ou 98) inclinée par rapport au plan de déplacement des cartes à puce (104) est ménagée sur l'organe de verrouillage (23).

8. Système de réception selon la revendication 5,
**caractérisé par le fait**
**que** deux verrous (62, 63) sont ménagés sur l'organe de verrouillage (23).

9. Système de réception selon la revendication 8,
**caractérisé par le fait**
**que** les verrous (62, 63) et l'élément de base (32) du support de cartes (20) correspondent l'un à l'autre de manière telle que des découpes (64, 65) sont ménagées dans l'élément de base (32) afin de permettre un enfoncement des verrous (62, 63) dans le plan de déplacement des cartes à puce (104) et
**que** l'élément de base (32) est, en outre, doté d'un évidement (61) qui, dans la direction de déplacement d'une carte à puce (104) à introduire, intervient dans l'élément de base (32) derrière le plan de verrouillage des verrous (62, 63).

10. Système de réception selon la revendication 2,
**caractérisé par le fait**
**que** la rainure de guidage (30, 31) s'élargit du côté avant dans la direction de déplacement des cartes à puce (104).

11. Système de réception selon la revendication 1,
**caractérisé par le fait**
**que** des liens par languettes et fentes sont prévus entre le tiroir de commande (21) et le support de cartes (20), les languettes (40, 41, 42, 43) ménagées sur les barrettes (33, 34) étant coudées et les fentes de guidage (44, 45) correspondant aux languettes (40, 41, 42, 43) et prévues dans le tiroir de commande (21) étant conçues en forme de trous de clefs.

12. Système de réception selon la revendication 4,
**caractérise par le fait**
**que** des socles (47, 48, 49, 50) destinés à la fixation du support de cartes (20) au lieu de montage sont formés sur les barrettes (33, 34) et que au moins deux pivots de centrage (51, 52, 53, 54), ainsi que des alésages filetés (55, 56, 57, 58) sont ménagés sur lesdits socles.

13. Système de réception selon la revendication 4,
**caractérisé par le fait**
**qu'**un axe de suspension (59, 60) correspondant au cliquet d'arrêt (22) est formé directement sur le support de cartes (20) et
**que**, pour la fixation axiale du cliquet d'arrêt (22), il est prévu, sur le tiroir de commande (21), une languette de pression (71) conçue en forme de doigt.

14. Système de réception selon la revendication 1,
**caractérisé par le fait**
**que** la coulisse (24) prévue dans le tiroir de commande (21) est configurée de manière telle que, avec l'introduction d'une carte à puce (104) dans le support de cartes (20), l'organe de verrouillage (23) pivote hors de la position verrouillée et le plan de guidage du support de cartes (20) est libéré, que, lorsque le tiroir de commande (21) continue à être poussé par la carte à puce (104), l'organe de verrouillage (23) est maintenu dans la position pivotée et que, dans la position de fin de course de la carte à puce (104), l'organe de verrouillage (23) est automatiquement ramené dans la position verrouillée où il est, en même temps, verrouillé pour l'empêcher de pivoter.

15. Système de réception selon la revendication 6,
**caractérisé par le fait**
**que** le ressort (83) de maintien en position fermée est lié par assemblage géométrique à l'organe de verrouillage (23) en utilisant des moyens à crochets et oeillets, ainsi que des moyens d'appuis et de liaisons enfichées (89, 90/87, 88 et 91, 92).
